# DEMANDE DE BREVET EUROPEEN

(11) **EP 3 926 499 A1**
(43) Date de publication de la demande: **22.12.2021**
(21) Numéro de dépôt: 21179541.4
(22) Date de dépôt: 15.06.2021
(51) Int. Cl.: G06F 21/32, G06F 21/36, H04W 12/06

(54) **PROCÉDÉ D'AUTHENTIFICATION D'UN UTILISATEUR SUR UN ÉQUIPEMENT CLIENT AVEC UN SYSTÈME D'ARCHIVAGE SÉCURISÉ DE JUSTIFICATIFS D'IDENTITÉ**

(30) Priorité: 17.06.2020 FR 2006332
(71) Demandeur: Idemia Identity & Security France, 92400 Courbevoie (FR)
(72) Inventeur: ADJAZ, Aghiles, 92400 COURBEVOIE (FR); BEAUDEAU, Jérôme, 92400 COURBEVOIE (FR); LE FLOCH, Jean Luc, 92400 COURBEVOIE (FR); BAUZOU, Claude, 92400 COURBEVOIE (FR)
(74) Mandataire: Regimbeau

(57) **Abrégé**

L'invention propose un procédé d'authentification d'un utilisateur sur un équipement client (2), l'utilisateur étant équipé d'un terminal (1) personnel, le procédé étant caractérisé en ce qu'il comprend la mise en œuvre par des moyens de traitement de données (21) dudit équipement client (2) d'étapes de :
(a).Lorsque ledit terminal (1) personnel de l'utilisateur est à proximité dudit équipement client (2), réception depuis le terminal (1) et stockage temporaire sur des moyens de stockage de données (22) de l'équipement client (2) de :
- une donnée biométrique de référence dudit utilisateur ; et
- au moins une donnée alphanumérique d'authentification de l'utilisateur ;
stockés sur des moyens de stockage de données (12) du terminal (1) ;

(b). Identification dudit utilisateur via une reconnaissance biométrique à partir d'une donnée biométrique candidate de l'utilisateur et de la ou les données biométriques de référence stockée(s) sur les moyens de stockage de données (22) de l'équipement client (2) ;
(c).Utilisation de l'au moins une donnée alphanumérique d'authentification de l'utilisateur identifié stockée sur les moyens de stockage de données (22) de l'équipement client (2), pour authentification dudit utilisateur.

## Description

*Cette demande de brevet est en liaison avec un projet ayant reçu des fonds du programme Horizon 2021 de l'Union Européenne pour la recherche et l'innovation sous l'égide du Grant agreement européen No* 826293.

### DOMAINE DE L'INVENTION

L'invention concerne un procédé d'authentification d'un utilisateur sur un équipement client, l'utilisateur étant équipé d'un terminal personnel.

### ETAT DE LA TECHNIQUE

Il est connu dans de très nombreuses organisations (entreprises, organismes publics, lieux accessibles au public, etc.) de mettre en place un système informatique composé de postes de travail sécurisés par couple login/password, permettant à des clients d'accéder à tout ou partie du SI.

Plus précisément, chaque utilisateur dispose d'un identifiant (le login), qui est généralement son nom, son adresse e-mail, un numéro (de téléphone, de sécurité sociale, etc.) ou toute autre donnée personnelle ; et d'un mot de passe confidentiel. Ce couple est souvent appelé « credential ».

Lorsqu'il souhaite utiliser un poste de travail, il requiert une authentification (par exemple en appuyant sur CTRL+ALT+SUPPR sur le clavier), et une fenêtre d'authentification s'affiche pour la saisie de son identifiant et de son mot de passe.

Le plus souvent, le poste de travail client génère une empreinte cryptographique du mot de passe saisi (par une fonction de hachage), et interroge un serveur du système pour savoir si, pour l'utilisateur désigné par l'identifiant saisi, cette empreinte cryptographique candidate coïncide avec une empreinte cryptographique de référence attendue.

Si ce système apporte généralement entière satisfaction, on constate des problèmes de « comportement » des utilisateurs liés au fait de communiquer un couple identifiant/mot de passe d'un utilisateur à un autre pour le « dépanner », voire de l'écrire sur un papier.

Par exemple, il a été observé dans des hôpitaux que, bien que chaque membre du personnel médical possède son propre couple identifiant/mot de passe, tous les membres du personnel médical utilisent le même pour s'authentifier auprès du SI de l'hôpital, et en plus de cela le couple en question est écrit sur un post-it collé à côté de chaque machine médicale ou de station de travail. Le couple pourrait être utilisé par n'importe quelle personne (personnel médical, patient, visiteur, etc.) et cela pose un énorme problème de sécurité qui peut affecter la vie ou la vie privée des patients.

Ainsi, la sécurisation des systèmes d'information est devenue une priorité absolue au regard de la multiplication des attaques les visant et de la sensibilité des informations pouvant être détenues.

De sorte à éviter les problématiques de manipulation de mot de passe, il a été proposé d'ajouter sur les postes de travail client une « brique » biométrique, telle que Windows Hello.

On remplace la saisie du couple identifiant/mot de passe par une authentification biométrique sur la base d'un trait biométrique tel qu'une empreinte digitale, le visage ou l'iris de l'utilisateur. Ce dernier n'a plus besoin de connaître un mot de passe.

Cependant, le problème de cette solution est qu'elle se base sur le fait que chaque poste de travail est un équipement propre à l'utilisateur. Ainsi une donnée biométrique de l'utilisateur est stockée sur son poste de travail et toute vérification biométrique est faite par rapport à la donnée biométrique stockée.

Cette solution n'est pas applicable lorsque le poste de travail est partagé entre tous les membres d'une organisation, comme dans le cas évoqué avant d'un hôpital, et cela pour plusieurs raisons :
- Il faudrait avoir une base de données biométriques centralisée, ce qui n'est pas forcément acceptable avec la législation et réglementation en vigueur dans le pays donné (par exemple RGPD en Europe);
- Il faudrait enregistrer une à une les données biométriques de référence de tous les membres de l'organisation, ce qui serait très long et contraignant ;
- Il faudrait que les solutions disponibles sur le marché puissent supporter cette fonctionnalité (ce qui n'est pas évident).

Il serait ainsi souhaitable de disposer d'une solution simple, universelle, fiable, respectueuse de la réglementation en termes de données personnelles, et totalement sécurisée d'authentification d'un utilisateur sur n'importe quel poste de travail d'un système d'information.

### PRESENTATION DE L'INVENTION

Selon un premier aspect, l'invention concerne un procédé d'authentification d'un utilisateur sur un équipement client, l'utilisateur étant équipé d'un terminal personnel, le procédé étant caractérisé en ce qu'il comprend la mise en oeuvre par des moyens de traitement de données dudit équipement client d'étapes de :
(a). Lorsque ledit terminal personnel de l'utilisateur est à proximité dudit équipement client (2), réception depuis le terminal et stockage temporaire sur des moyens de stockage de données de l'équipement client de :
   - une donnée biométrique de référence dudit utilisateur ; et
   - au moins une donnée alphanumérique d'authentification de l'utilisateur ;
   stockés sur des moyens de stockage de données du terminal ;
(b).Identification dudit utilisateur via une reconnaissance biométrique à partir d'une donnée biométrique candidate de l'utilisateur et de la ou les données biométriques de référence stockée(s) sur les moyens de stockage de données de l'équipement client ;
(c).Utilisation de l'au moins une donnée alphanumérique d'authentification de l'utilisateur identifié stockée sur les moyens de stockage de données de l'équipement client, pour authentification dudit utilisateur.

Selon d'autres caractéristiques avantageuses et non limitatives :
L'étape (b) comprend l'identification, parmi la ou les données biométriques de référence stockées sur les moyens de stockage de données de l'équipement client, de la donnée biométrique de référence coïncidant avec la donnée biométrique candidate de l'utilisateur.

L'étape (b) comprend la comparaison de la donnée biométrique candidate avec chaque donnée biométrique de référence sur les moyens de stockage de données de l'équipement client.

La donnée biométrique candidate et une donnée biométrique de référence coïncident si leur distance selon une fonction de comparaison donnée est inférieure à un seuil prédéterminé.

L'au moins une donnée alphanumérique d'authentification utilisée à l'étape (c) est celle associée à ladite donnée biométrique de référence coïncidant avec la donnée biométrique candidate de l'utilisateur.

Le procédé comprend une étape (d) de suppression des moyens de stockage de données de l'équipement client desdites donnée biométrique de référence et au moins une donnée alphanumérique d'authentification de l'utilisateur.

L'étape (d) est mise en œuvre conformément à un motif temporel prédéterminé.

Ledit terminal est déterminé à proximité et l'étape (a) mise en œuvre, quand une connexion sans-fil de courte portée est établie entre le terminal et l'équipement client, en particulier une connexion Bluetooth Low Energy ou Ultra Wide Band.

L'étape (b) comprend la génération de la donnée biométrique candidate à partir d'un trait biométrique de l'utilisateur fourni par des moyens d'acquisition biométrique de l'équipement.

Le procédé comprend la mise en œuvre par des moyens de traitement de données du terminal d'une étape (a0) antérieure d'obtention de l'au moins une donnée alphanumérique d'authentification de l'utilisateur, et de génération de la donnée biométrique de référence à partir d'un trait biométrique de référence de l'utilisateur.

L'étape (a0) comprend le chiffrement desdites donnée biométrique de référence et au moins une donnée alphanumérique d'authentification de l'utilisateur avec une clé publique de l'équipement client, l'étape (a) comprenant leur déchiffrement par les moyens de traitement de données de l'équipement client avec une clé privée de l'équipement client.

L'au moins une donnée alphanumérique d'authentification de l'utilisateur comprend un mot de passe de l'utilisateur ou une empreinte cryptographique d'un mot de passe de l'utilisateur.

Selon un deuxième aspect, l'invention propose un équipement client comprenant des moyens de stockage de données et des moyens de traitement de données, caractérisé en ce que lesdits moyens de traitement de données sont configurés pour :
- Lorsqu'un terminal personnel d'un utilisateur est à proximité dudit équipement client, recevoir depuis le terminal et stocker temporairement sur les moyens de stockage de données :
   - une donnée biométrique de référence dudit utilisateur ; et
   - au moins une donnée alphanumérique d'authentification de l'utilisateur ;
   stockés sur des moyens de stockage de données du terminal ;
- Identifier ledit utilisateur via une reconnaissance biométrique à partir d'une donnée biométrique candidate de l'utilisateur et de la ou les données biométriques de référence stockée(s) sur les moyens de stockage de données ;
- Utiliser l'au moins une donnée alphanumérique d'authentification de l'utilisateur identifié stockée sur les moyens de stockage de données, pour authentification dudit utilisateur.

Selon un troisième aspect, l'invention concerne un ensemble comprenant un équipement client selon le deuxième aspect, et au moins un terminal personnel d'un utilisateur comprenant des moyens de stockage de données stockant :
- une donnée biométrique de référence dudit utilisateur ; et
- au moins une donnée alphanumérique d'authentification de l'utilisateur.

Selon un quatrième et un cinquième aspect, l'invention concerne un produit programme d'ordinateur comprenant des instructions de code pour l'exécution d'un procédé selon le premier aspect d'authentification d'un utilisateur sur un équipement client ; et un moyen de stockage lisible par un équipement informatique sur lequel un produit programme d'ordinateur comprend des instructions de code pour l'exécution d'un procédé selon le premier aspect d'authentification d'un utilisateur sur un équipement client.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :
La figure 1 représente schématiquement un système pour la mise en œuvre du procédé selon l'invention ;
La figure 2 représente schématiquement les étapes d'un mode de réalisation préféré du procédé selon l'invention.

### DESCRIPTION DETAILLEE

### Architecture

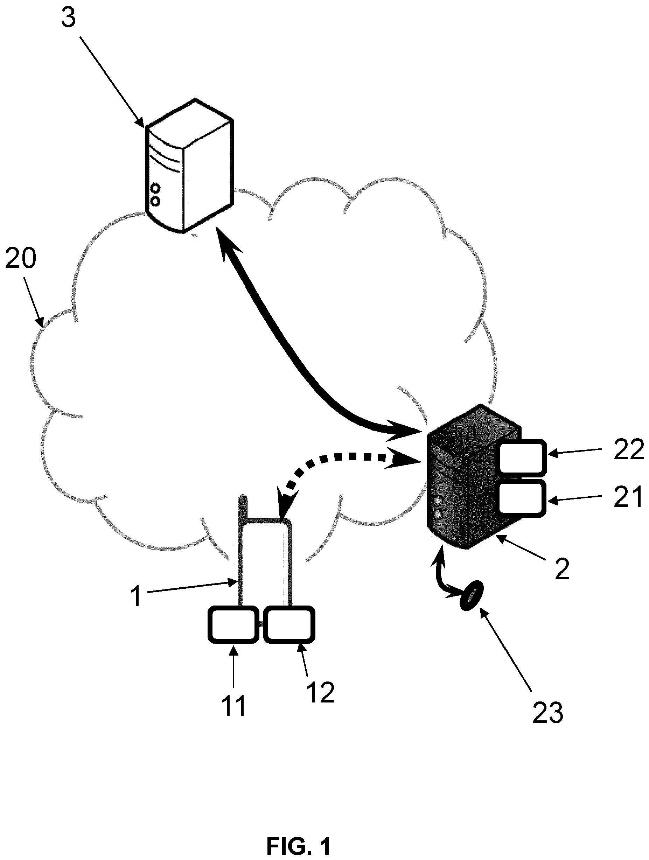

En référence à la **Figure 1**, on a représenté schématiquement une architecture de système informatique au sein duquel est mis en œuvre le présent procédé d'authentification d'un utilisateur sur un équipement client 2, en vue de l'autorisation d'accès de l'utilisateur audit système informatique.

De façon préférée on a un ou plusieurs équipements clients 2 classiquement connectés via un réseau sécurisé 10 à au moins un serveur d'authentification 3, dit « Security Accounts Manager », SAM, chaque équipement client 2 permettant à un utilisateur authentifié l'accès aux fonctionnalités de l'équipement client 2 et/ou à des ressources partagées dans le réseau sécurisé 10.

On suppose que ledit système informatique est déjà configuré pour une authentification « conventionnelle », i.e. que l'utilisateur (et préférentiellement une pluralité d'utilisateurs) dispose d'au moins une information alphanumérique d'authentification personnelle formant un « crédentiel » de l'utilisateur, en particulier un identifiant et/ou un mot de passe (mais également possiblement un numéro de téléphone, une adresse e-mail, etc.), et qu'il est autorisé à s'authentifier sur tout ou partie des équipements clients 2 grâce à une information alphanumérique d'authentification personnelle (par comparaison avec une information alphanumérique d'authentification personnelle attendue détenue par le SAM 3) pour accéder aux fonctionnalités de l'équipement client 2 et par là à tout ou partie des ressources partagées. De manière préférée, sur un même équipement client 2 une pluralité d'utilisateurs peuvent s'identifier, i.e. chaque équipement client 2 n'est pas personnel à un utilisateur.

Naturellement, il est tout à fait possible que les utilisateurs n'aient pas tous les mêmes droits d'accès et donc peuvent au final avoir accès à des ressources partagées différentes. On comprend que des utilisateurs différents ont des informations alphanumériques d'authentification différentes du fait de leur caractère personnel. Bien évidemment, il reste possible que des utilisateurs se communiquent des informations alphanumériques (i.e. l'un s'authentifie avec les informations de l'autre), mais un tel comportement est à proscrire du fait des risques de sécurité qu'il fait courir, et on verra que dans le cadre de la présente invention cela ne marchera plus.

On comprendra qu'ici la notion d'information « alphanumérique » entend que l'utilisateur saisit cette information de manière conventionnelle au clavier, et qu'elle exclut par exemple les informations biométriques qui sont acquises via des moyens dédiés. Dans la suite de la présente description, on prendra l'exemple dans lequel il y a deux informations alphanumériques : un couple identifiant/mot de passe. A noter que cette notion d'information alphanumérique englobera également le cas dans lequel on manipule une empreinte cryptographique (c'est-à-dire un « haché », tel qu'obtenu par une fonction de hachage) d'une information alphanumérique d'origine. En effet, plutôt que de comparer des informations alphanumériques d'authentification personnelles « en clair », on compare habituellement leurs empreintes cryptographiques (typiquement le cas des mots de passe, on rappelle que cela ne peut marcher que pour des empreintes d'informations elles-mêmes alphanumériques et pas pour des empreintes cryptographiques par exemple de données biométriques) car cela permet de garder l'information alphanumérique d'origine secrète car il n'est pas possible de remonter à l'information alphanumérique d'origine à partir de son empreinte cryptographique. Ainsi, dans la suite de la présente description, on comprendra que le terme information alphanumérique d'authentification personnelle peut désigner aussi bien une information « telle quelle » qu'une empreinte d'une première information alphanumérique.

On insiste sur le fait que l'authentification est « conventionnelle », i.e. que le présent procédé vient s'intégrer à un schéma existant : il n'y a besoin de modifier ni les logiciels utilisés (on va simplement rajouter une couche par-dessus, il n'y a pas de remplacement de brique comme dans Windows Hello) ni les informations alphanumériques d'authentification personnelle attendues déjà stockées (i.e. les utilisateurs continuent d'utiliser les mêmes identifiants/mot de passe qu'avant).

Comme on le verra, on suppose également que l'utilisateur (et préférentiellement plusieurs voire tous les utilisateurs) est équipé d'un terminal personnel 1.

Selon un mode de réalisation préféré, il s'agit d'un terminal mobile de type smartphone ou tablette tactile, mais il peut s'agir d'une carte à puce (de type « smart card »), d'un token USB, etc. Tout dispositif électronique personnel à l'utilisateur comprenant des moyens de traitement de données 11 (i.e. un calculateur tel que par exemple un processeur, un microprocesseur, un contrôleur, un microcontrôleur, un FPGA etc.), des moyens de stockage de données 12 (une mémoire flash, une mémoire de microprocesseur, etc.), et apte à communiquer avec l'équipement client 2 pourra être utilisé comme terminal 1. Comme on le verra il s'agit d'une communication courte portée, i.e. le terminal 1 et l'équipement client 2 ne sont par exemple pas juste deux équipements connectés via internet.

Dans un mode de réalisation préféré, le terminal 1 est apte à mettre en œuvre une communication sans-fil (de courte portée) avec l'équipement client 2, soit directement (par exemple via Bluetooth, et en particulier Bluetooth Low Energy - BLE, ou Ultra Wide Band - UWB), soit indirectement (par exemple en se connectant en Wifi à une passerelle dans ledit réseau sécurisé 10). On comprend que l'utilisateur n'a le plus souvent même pas à manipuler le terminal 1 : après un premier appariement, dès que le terminal 1 est à portée la connexion se fait automatiquement.

Alternativement ou en complément, le terminal 1 est apte à mettre en œuvre une communication filaire avec l'équipement client 2, par exemple via un port ou câble (USB, Thunderbolt, etc.) si le terminal 1 est un smartphone ou un token, ou bien un lecteur de carte si le terminal 1 est une carte à puce.

On comprendra que cela n'exclut pas l'existence d'une seconde connexion « longue portée », par exemple si le terminal 1 est lui-même connecté à un réseau de communication mobile en parallèle (tel que UMTS ou LTE), mais le présent procédé utilisera uniquement ladite communication courte portée.

De façon préférée, l'équipement client 2 (et éventuellement le terminal 1) est capable de générer une donnée biométrique à partir d'un trait biométrique d'un individu. Le trait biométrique peut par exemple être la forme du visage, un iris de l'individu, une empreinte digitale de l'individu, etc. L'extraction de la donnée biométrique est mise en œuvre par un traitement de l'image du trait biométrique qui dépend de la nature du trait biométrique. Des traitements d'images variés pour extraire des données biométriques sont connus de l'Homme du Métier. A titre d'exemple non limitatif, l'extraction de la donnée biométrique peut comprendre une extraction de points particuliers ou d'une forme du visage dans le cas où l'image est une image du visage de l'individu.

L'équipement client 2 peut être n'importe quel poste de travail, ordinateur portable, machine, station, etc., local(e) sur lequel l'utilisateur doit s'authentifier. A nouveau il comprend des moyens de traitement de données 21 et des moyens de stockage de données 22, et avantageusement des moyens d'acquisition biométrique 23, typiquement un capteur d'image (par exemple un appareil photographique numérique, une caméra numérique, un scanner si le trait est une empreinte digitale, etc.), adapté pour acquérir au moins une image d'un trait biométrique d'un individu.

A noter que les moyens d'acquisition biométrique 23 peuvent être en pratique soit intégrés à l'équipement client 2 (par exemple de nombreux ordinateurs portables ont un scanner d'empreinte digitales sur le clavier) ou distincts de l'équipement client 2 et simplement connectés, en particulier via une connexion filaire (typiquement sous la forme d'une webcam). On suppose que l'équipement client 2 a confiance en ces moyens d'acquisition biométrique 23.

Dans un mode de réalisation, l'équipement client 2 met en œuvre une authentification de l'individu, c'est-à-dire compare une donnée biométrique dite candidate, car fraichement acquise sur l'individu, à une seule donnée biométrique dite de référence, censée provenir du même individu, afin de vérifier que l'individu à partir duquel ont été obtenues les deux données est bien le même.

Dans ce cas, la donnée biométrique de référence utilisée pour l'authentification est, comme on le verra avantageusement, une donnée enregistrée dans un document d'identité de l'individu (par exemple, une image du visage figurant sur un document d'identité, ou encore une image du visage ou d'au moins un iris de l'individu enregistrée dans une puce radiofréquence contenue dans le document) ou bien issue d'un trait biométrique acquis dans des conditions contrôlées.

### Principe

La présente invention propose de rajouter un deuxième niveau d'authentification biométrique tout en évitant la nécessité d'une base de données biométriques centralisée en utilisant astucieusement le terminal personnel 1 de l'utilisateur comme moyen de fourniture temporaire d'une donnée biométrique de référence de l'utilisateur.

Plus précisément, l'idée est d'encapsuler le credential « traditionnel » (l'information alphanumérique d'authentification personnelle) dans un nouveau credential incluant la biométrie stockée sur son terminal 1. Au moment où l'utilisateur s'approche d'un équipement client 2, le nouveau credential est transmis à cette dernière de manière transparente via la connexion avec le terminal 1 pour stockage temporaire sur l'équipement client 2, et lorsqu'il choisit de s'authentifier via cette solution, une donnée biométrique candidate (fraîchement acquise) peut être comparée aux données biométriques de référence stockées (de manière temporaire) sur l'équipement 2. Une fois l'identification biométrique faite, on peut décapsuler le nouveau credential pour récupérer le credential traditionnel et l'utiliser pour authentification conventionnelle.

On voit donc qu'il n'y a aucun problème de respect de la réglementation sur la vie privée, puisque le stockage des données biométriques de référence n'est que temporaire : il n'y a aucun besoin de disposer de la donnée biométrique de référence d'un utilisateur lorsque celui-ci n'est pas à proximité de l'équipement client 2, et elle pourra être rechargée ultérieurement lorsque l'utilisateur s'approchera de nouveau.

De surcroît, alors que les solutions connues n'avaient qu'un facteur d'authentification (l'information alphanumérique d'authentification personnelle ou la biométrie), on a ici un deuxième facteur qui est la possession du terminal 1. En d'autres termes on a une authentification forte (« ce que j'ai » et « ce que je suis »). Ainsi, quand bien même un utilisateur essayerait de frauder la reconnaissance biométrique en se faisant par exemple un masque d'un utilisateur autorisé, il serait rejeté puisqu'il ne possède pas son terminal 1.

Enfin, on comprend bien qu'une telle solution est particulièrement ergonomique et confortable pour les utilisateurs puisqu'ils n'ont rien à faire hormis être devant l'équipement client 2 (au pire connecter le terminal 1).

### Enrôlement

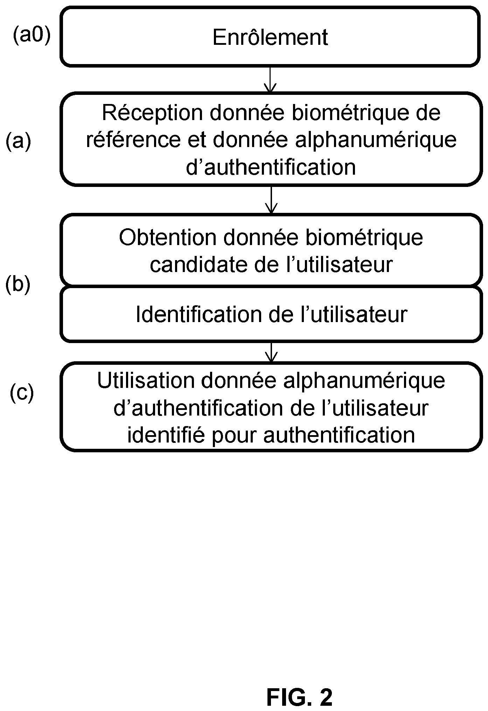

Dans un mode de réalisation préféré, en référence à la **Figure 2****,** le procédé comprend une étape préalable (a0) « d'enrôlement » permettant la mise à disposition de la donnée biométrique de référence de l'utilisateur et de l'au moins une donnée alphanumérique d'authentification de l'utilisateur sur les moyens de stockage de données 12 du terminal 1. A cet effet, une application peut être installée sur le terminal 1.

Cette étape peut être mise en œuvre longtemps avant le reste du procédé, et ne nécessite pas d'être réitérée à chaque occurrence du procédé (on peut par exemple la prévoir une fois par an).

Typiquement, cette étape comprend :
- L'obtention de l'au moins une donnée alphanumérique d'authentification de l'utilisateur (on demande avantageusement simplement à l'utilisateur de la saisir sur le terminal 1).
- La génération par les moyens de traitement de données 11 du terminal 1 de la donnée biométrique de référence à partir d'un trait biométrique de référence soit associé à un document officiel (en particulier un document d'identité tel qu'un passeport ou une carte d'identité) soit acquis par l'utilisateur (par exemple via des moyens d'acquisition biométrique du terminal).

La deuxième partie peut être faite de nombreuses façons. Par exemple, l'utilisateur peut directement récupérer sur son terminal 1 le trait biométrique enregistré dans une puce radiofréquence contenue dans le document (si l'équipement 1 dispose d'un lecteur radiofréquence de type NFC), prendre une photographie de ce document avec la caméra de son terminal 1, ou encore une photographie de lui-même.

Si un haut niveau de sécurité est requis pour l'accès aux équipements client 2, il peut être requis de faire vérifier et valider par une autorité de contrôle la donnée biométrique générée en tant que donnée de référence. Par exemple ladite photographie de l'individu peut devoir être effectuée en présence d'un représentant de l'autorité (par exemple à un guichet en mairie).

Cette vérification peut être faite de nombreuses façons, et consiste simplement à vérifier que la donnée biométrique de référence soumise à vérification est bien cohérente avec un document officiel.

Avantageusement, l'étape (a0) comprend comme expliqué le calcul de l'empreinte cryptographique d'au moins une donnée alphanumérique d'authentification obtenue, par exemple du mot de passe. Préférentiellement, on remplace la donnée alphanumérique d'authentification initiale par son empreinte cryptographique (i.e. on supprime la première).

Enfin, l'étape (a0) comprend avantageusement l'encapsulation de la donnée biométrique de référence dudit utilisateur et de l'au moins une donnée alphanumérique d'authentification de l'utilisateur (le cas échéant l'empreinte cryptographique), sous la forme d'un nouveau credential. Cela consiste généralement en un chiffrement de la donnée biométrique de référence dudit utilisateur et de l'au moins une donnée alphanumérique d'authentification de l'utilisateur. Pour cela, les moyens de traitement de données 11 du terminal 1 appliquent par exemple une fonction de chiffrement asymétrique, en particulier avec une clé publique de l'équipement client 2. De la sorte, quand bien même un tiers intercepterait ce credential il ne pourrait pas remonter à la donnée biométrique de référence ou la donnée alphanumérique d'authentification de l'utilisateur.

De façon générale, on comprendra que l'étape (a0) pourra être mise en œuvre de n'importe quelle façon permettant le stockage sur le terminal 1 de la donnée biométrique de référence et l'au moins une donnée alphanumérique d'authentification de l'utilisateur.

### Authentification

On va maintenant décrire le procédé d'authentification d'un utilisateur sur l'équipement client 2. Ce procédé est mis en œuvre par les moyens de traitement de données 21 de l'équipement client 2.

On suppose comme expliqué que le terminal 1 dispose d'une donnée biométrique de référence dudit utilisateur et d'au moins une donnée alphanumérique d'authentification de l'utilisateur. Comme expliqué, ces dernières peuvent être obtenues préalablement lors d'une étape (a0) d'enrôlement.

Dans une première étape (a), lorsque ledit terminal 1 personnel de l'utilisateur est à proximité dudit équipement client 2, lesdites donnée biométrique de référence et au moins une donnée alphanumérique d'authentification de l'utilisateur (en particulier encapsulées) sont reçues depuis le terminal 1 et temporairement stockées sur les moyens de stockage de données 22 de l'équipement client 2.

De manière préférée le stockage est anonymisé, il suffit pour cela simplement d'associer ensemble (i.e. stocker de manière associée) une donnée biométrique de référence et une donnée alphanumérique d'authentification quand elles sont reçues ensemble, puisqu'elles correspondent au même utilisateur. Pour reformuler encore, on suppose qu'une donnée biométrique de référence et au moins une donnée alphanumérique d'authentification associées proviennent du même utilisateur.

Cette étape (a) est avantageusement automatiquement mise en œuvre dès qu'un terminal 1 est détecté à proximité, i.e. pour chaque terminal 1 d'un utilisateur potentiellement autorisé à s'authentifier sur l'équipement client 2 (i.e. stockant une donnée biométrique de référence et un moins une donnée alphanumérique d'authentification de son utilisateur). Cette détection de proximité peut tout simplement être l'établissement de la connexion, en particulier si c'est une connexion filaire ou sans-fil de courte portée. Elle peut être à l'initiative de l'un ou l'autre du terminal 1 et de l'équipement client 2. Dans l'exemple BLE, dès appariement, le transfert et le stockage sont effectués. Alternativement, on peut déterminer une distance, par exemple via RSSI (Received Signal Strength Indication), et considérer que le terminal 1 est à proximité en dessous d'un seuil prédéterminé, pour limiter le volume de données à stocker si par exemple de nombreux utilisateurs sont dans la même pièce.

A noter que naturellement, la mise en œuvre de l'étape (a) peut être sous réserve que les moyens de stockage 22 ne stockent pas déjà lesdites données biométriques de référence et au moins une donnée alphanumérique d'authentification de l'utilisateur. En effet, même si le stockage est temporaire (on verra les modalités plus loin), il est tout fait possible que l'utilisateur s'écarte brièvement de l'équipement client 2 (par exemple pour aller dans une autre pièce) et revienne, de sorte qu'on aura un ré-établissement de la connexion mais pas besoin de récupérer à nouveau lesdites donnée biométrique de référence et au moins une donnée alphanumérique d'authentification de l'utilisateur.

L'étape (a) peut comprendre le déchiffrement des données si elles ont été chiffrées, en particulier en supposant que l'équipement client 2 dispose d'une clé privée complémentaire de la clé publique utilisée pour le chiffrement.

On répète que l'étape (a) est préférentiellement automatique, i.e. l'utilisateur n'a pas besoin de requérir le transfert de ses données et ce peut être fait avant même que l'utilisateur ne signale qu'il souhaite s'authentifier sur l'équipement client 2. Ainsi, il est tout à fait possible que l'équipement client 2 stocke au final les données de plusieurs autres utilisateurs qui sont juste passés à proximité et qui au final n'utiliseront pas l'équipement client 2, mais cela ne pose aucun problème puisque le stockage reste temporaire.

A l'issue de l'étape (a), on suppose que l'équipement client 2 dispose d'une base temporaire de données biométriques de référence chacune associée à au moins une donnée alphanumérique d'authentification (on répète que des données associées correspondent au même individu).

Dans une étape (b) principale, les moyens de traitement de données 21 de l'équipement client identifient l'utilisateur via une reconnaissance biométrique à partir d'une donnée biométrique candidate de l'utilisateur et de la ou les données biométriques de référence stockée(s) sur les moyens de stockage de données 22 de l'équipement client 2.

Ici, ledit utilisateur dont il est question est un utilisateur « cible », en l'espèce l'utilisateur souhaitant s'authentifier sur l'équipement client, et pour lequel on dispose d'une donnée biométrique candidate (et pas n'importe quel utilisateur à proximité comme dans l'étape (a)).

Cette étape est bien une étape d'identification et non d'authentification du fait qu'il peut y avoir plus d'une donnée biométrique de référence stockée, en particulier s'il y a plusieurs utilisateurs à proximité. En d'autres termes, il s'agit d'une étape d'identification, parmi la ou les données biométriques de référence stockées sur les moyens de stockage de données 22 de l'équipement client 2, de la donnée biométrique de référence coïncidant avec la donnée biométrique candidate, cette donnée de référence étant dite « cible » (i.e. de l'utilisateur cible). Pour cela, l'étape (b) comprend typiquement la comparaison de la donnée biométrique candidate avec chaque donnée biométrique de référence, de sorte à identifier la donnée biométrique de référence coïncidant avec la donnée biométrique candidate.

A noter qu'il reste tout à fait possible qu'aucune donnée biométrique de référence ne coïncide avec la donnée biométrique candidate, en particulier si l'utilisateur ne dispose pas d'un terminal 1 propre (qu'il l'ait oublié ou qu'il tente frauduleusement de s'authentifier). Ainsi, même en ayant obtenu les credentials d'un utilisateur valide et/ou en mettant un masque de cet utilisateur, un tiers ne pourrait pas s'authentifier puisque les données biométriques de référence de cet utilisateur ne seraient pas stockées par l'équipement 2.

De façon connue, la donnée biométrique candidate et une donnée biométrique de référence coïncident si leur distance selon une fonction de comparaison donnée est inférieure à un seuil prédéterminé.

Ainsi, la mise en œuvre de la comparaison comprend le calcul d'une distance entre les données, dont la définition varie en fonction de la nature des données biométriques considérées. Le calcul de la distance comprend souvent le calcul d'un polynôme entre les composantes des données biométriques, et avantageusement le calcul d'un produit scalaire.

Par exemple, dans le cas où les données biométriques ont été obtenues à partir d'images d'iris, une distance classiquement utilisée pour comparer deux données est la distance de Hamming. Dans le cas où les données biométriques ont été obtenues à partir d'images du visage d'individu, il est courant d'utiliser la distance euclidienne.

Ce type de comparaison est connu de l'Homme du Métier et ne sera pas décrit plus en détails ci-après.

L'individu est identifié si la comparaison révèle un taux de similarité entre la donnée candidate et une donnée de référence (dite cible comme expliqué) excédant un certain seuil, dont la définition dépend de la distance calculée.

L'étape (b) comprend avantageusement l'obtention préalable de la donnée biométrique candidate, « fraîche », typiquement générée à partir d'un trait biométrique fourni par des moyens d'acquisition biométrique 23 de l'équipement client 2. En d'autres termes, l'utilisateur de l'équipement 2 utilise un dispositif automatique existant pour extraire la donnée biométrique candidate.

On note qu'alternativement, l'obtention de la donnée biométrique candidate peut être mise en œuvre par le terminal 1, i.e. l'utilisateur peut utiliser un trait biométrique fourni par des moyens d'acquisition biométrique de son propre terminal 1, mais utiliser ceux de l'équipement client 2 est préféré de sorte à éviter que l'utilisateur « falsifie » la biométrie en prenant par exemple en photo un autre utilisateur pour usurper son identité. A ce titre, de façon préférée les moyens d'acquisition biométrique 23 sont capables de détecter le vivant, de sorte à s'assurer que la donnée biométrique candidate est issue d'un trait « réel » et pas d'un masque que porterait un individu frauduleux.

L'étape (b) comprend avantageusement, de manière encore préalable, la réception d'une requête par l'utilisateur de son authentification sur l'équipement client 2, i.e. la mise en œuvre du procédé peut nécessiter une action de l'utilisateur. De manière classique, en particulier si on vient s'intégrer à une solution logicielle existante, il s'agit d'une combinaison de touches telle que CTRL + ALT + SUPPR. A partir de là, les moyens d'acquisition biométriques 23 peuvent acquérir la biométrie de l'utilisateur sur l'équipement 2 (qui est donc l'utilisateur cible).

A noter qu'on peut laisser le choix à l'utilisateur, lorsqu'il a requis son authentification, soit de procéder traditionnellement (saisie de ses données alphanumériques d'authentification), soit via le présent procédé, en particulier dans une hypothèse où tous les utilisateurs ne seraient pas munis d'un terminal 1 personnel. Il est cependant préférable que la solution conformément au présent procédé soit obligatoire pour ne pas affaiblir la sécurité et assurer une authentification forte.

Alternativement à la réception d'une requête, le procédé peut être complètement automatique, avec par exemple des moyens d'authentification 23 aptes à détecter qu'un utilisateur s'installe sur l'équipement 2 qui acquièrent alors directement sa biométrie. Cela est typiquement le cas avec un capteur d'empreintes digitales : dès qu'un utilisateur pose son doigt sur le capteur on peut supposer qu'il souhaite s'authentifier, et ainsi l'équipement client lance directement son identification.

Dans tous les cas, la mise en œuvre de l'étape (b) peut rester soumise au fait qu'aucun utilisateur ne soit déjà authentifié sur l'équipement client 2, i.e. qu'une session soit déjà en cours : on peut décider que l'utilisateur actuellement sur l'équipement 2 doive se déconnecter pour qu'on tente d'authentifier un nouvel utilisateur. Alternativement, chaque utilisateur peut avoir accès à sa propre session avec ses propres privilèges.

Dans une étape (c), l'équipement client 2 utilise l'au moins une donnée alphanumérique d'authentification de l'utilisateur identifié, pour son authentification.

L'étape (c) est ainsi une étape d'authentification classique de l'utilisateur (les données alphanumériques d'authentification sont typiquement transmises au serveur 3 et comparées avec des données alphanumériques attendues), mais au lieu que l'utilisateur saisisse ses données alphanumériques d'authentification, l'équipement 2 utilise directement celles récupérées depuis son terminal 1. En d'autres termes, l'utilisateur identifié est enfin authentifié en utilisant son au moins une donnée alphanumérique d'authentification stockée sur les moyens de stockage de données 22 de l'équipement client 2.

Bien qu'il reste possible à l'issue de l'étape (b) de disposer de l'identité précise de l'utilisateur identifié, on note qu'avantageusement l'équipement 2 peut se baser uniquement sur le résultat de l'identification de l'étape (b).

Plus précisément, l'au moins une donnée alphanumérique d'authentification utilisée est de manière préférée celle associée à la donnée biométrique de référence « cible » identifiée à l'étape (b). En effet, on sait qu'une donnée biométrique de référence et une donnée alphanumérique d'authentification associées correspondent au même utilisateur, en l'espèce l'utilisateur identifié.

En résumé, dans le mode de réalisation préféré, l'étape (b) voit l'identification, parmi la ou les données biométriques de référence stockées sur les moyens de stockage de données 22 de l'équipement client 2, de la donnée biométrique de référence coïncidant avec la donnée biométrique candidate, et l'étape (c) voit l'authentification de l'utilisateur en utilisant l'au moins une donnée alphanumérique d'authentification associée à la donnée biométrique de référence coïncidant avec la donnée biométrique candidate.

### Caractère temporaire du stockage

Comme expliqué, le stockage sur les moyens de stockage de données 22 de l'équipement client 2 de la donnée biométrique de référence dudit utilisateur, et l'au moins une donnée alphanumérique d'authentification de l'utilisateur est temporaire.

A ce titre, le procédé comprend avantageusement une étape (d) de suppression sur les moyens de stockage de données 22 de l'équipement client 2 de la donnée biométrique de référence dudit utilisateur, et l'au moins une donnée alphanumérique d'authentification de l'utilisateur.

Cette étape (d) peut être mise en œuvre de nombreuses façons différentes, préférentiellement conformément à un motif temporel prédéterminé. Par exemple :
- Une fois qu'une authentification a été mise en œuvre, les données de l'utilisateur identifié, voire de tous les utilisateurs, sont supprimées ; et/ou
- La suppression a lieu au bout d'un temps prédéterminé après le stockage sur les moyens 22 de l'équipement 2, par exemple au bout d'une heure ; et/ou
- Toutes les données de tous les utilisateurs sont supprimées périodiquement, par exemple tous les jours à minuit ;
- Etc.

Tous les schémas sont possibles, il suffit juste de garantir que les données ne sont stockées que temporairement pour garantir le respect de la vie privée des utilisateurs et leur sécurité informatique.

### Equipement et système

Selon un deuxième aspect, est proposé l'équipement client 2 pour la mise en œuvre du procédé selon le premier aspect, i.e. l'authentification d'un utilisateur.

L'équipement client 2 est typiquement connecté à un réseau 10 (et ainsi à un serveur d'authentification 3), et comprend des moyens de stockage de données 22, avantageusement des moyens d'acquisition biométrique 23, ainsi que des moyens de traitement de données 21 configurés pour :
- Lorsqu'un terminal 1 personnel d'un utilisateur est à proximité dudit équipement client 2 (par exemple connecté via une connexion sans-fil de courte portée telle que BLE), recevoir depuis le terminal 1 et stocker temporairement sur les moyens de stockage de données 22 :
   - une donnée biométrique de référence dudit utilisateur ; et
   - au moins une donnée alphanumérique d'authentification de l'utilisateur ;
   stockés sur des moyens de stockage de données 12 du terminal 1 ;
- Identifier ledit utilisateur via une reconnaissance biométrique à partir d'une donnée biométrique candidate de l'utilisateur et de la ou les données biométriques de référence stockée(s) sur les moyens de stockage de données 22 (le cas échéant après avoir obtenu la donnée biométrique candidate à partir d'un trait biométrique acquis par les moyens 23);
- Utiliser l'au moins une donnée alphanumérique d'authentification de l'utilisateur identifié stockée sur les moyens de stockage de données 22 (i.e. celle associée à la donnée biométrique de référence identifiée comme coïncidant avec la donnée biométrique candidate), pour authentification dudit utilisateur (par exemple en l'envoyant au serveur 3) ;
- Préférentiellement supprimer des moyens de stockage de données 22 lesdites donnée biométrique de référence et au moins une donnée alphanumérique d'authentification de l'utilisateur.

Selon un troisième aspect, est proposé le système d'authentification, i.e. l'ensemble de l'équipement client 2 et d'au moins un terminal 1 personnel d'un utilisateur comprenant des moyens de stockage de données 12 stockant :
- une donnée biométrique de référence dudit utilisateur ; et
- au moins une donnée alphanumérique d'authentification de l'utilisateur.

Ledit système peut également comprendre le serveur d'authentification 3.

### Produit programme d'ordinateur

Selon un quatrième et un cinquième aspects, l'invention concerne un produit programme d'ordinateur comprenant des instructions de code pour l'exécution (en particulier sur les moyens de traitement de données 21 de l'équipement client 2) d'un procédé selon le premier aspect de l'invention d'authentification d'un utilisateur sur un équipement client 2, ainsi que des moyens de stockage lisibles par un équipement informatique (une mémoire 22 de l'équipement 2) sur lequel on trouve ce produit programme d'ordinateur.

## Revendications

1. Procédé d'authentification d'un utilisateur sur un équipement client (2), l'utilisateur étant équipé d'un terminal (1) personnel, le procédé étant **caractérisé en ce qu'**il comprend la mise en œuvre par des moyens de traitement de données (21) dudit équipement client (2) d'étapes de :
(a).Lorsque ledit terminal (1) personnel de l'utilisateur est à proximité dudit équipement client (2), réception depuis le terminal (1) et stockage temporaire sur des moyens de stockage de données (22) de l'équipement client (2) de :
- une donnée biométrique de référence dudit utilisateur ; et
- au moins une donnée alphanumérique d'authentification de l'utilisateur ;
stockés sur des moyens de stockage de données (12) du terminal (1) ;
(b).Identification dudit utilisateur via une reconnaissance biométrique à partir d'une donnée biométrique candidate de l'utilisateur et de la ou les données biométriques de référence stockée(s) sur les moyens de stockage de données (22) de l'équipement client (2) ;
(c).Utilisation de l'au moins une donnée alphanumérique d'authentification de l'utilisateur identifié stockée sur les moyens de stockage de données (22) de l'équipement client (2), pour authentification dudit utilisateur.

2. Procédé selon la revendication 1, dans laquelle l'étape (b) comprend l'identification, parmi la ou les données biométriques de référence stockées sur les moyens de stockage de données (22) de l'équipement client (2), de la donnée biométrique de référence coïncidant avec la donnée biométrique candidate de l'utilisateur.

3. Procédé selon la revendication 2, dans lequel l'étape (b) comprend la comparaison de la donnée biométrique candidate avec chaque donnée biométrique de référence stockée sur les moyens de stockage de données (22) de l'équipement client (2).

4. Procédé selon l'une des revendications 2 et 3, dans lequel la donnée biométrique candidate et une donnée biométrique de référence coïncident si leur distance selon une fonction de comparaison donnée est inférieure à un seuil prédéterminé.

5. Procédé selon l'une des revendications 2 à 4, dans lequel l'au moins une donnée alphanumérique d'authentification utilisée à l'étape (c) est celle associée à ladite donnée biométrique de référence coïncidant avec la donnée biométrique candidate de l'utilisateur.

6. Procédé selon l'une des revendications 1 à 5, comprenant une étape (d) de suppression des moyens de stockage de données (22) de l'équipement client (2) desdites donnée biométrique de référence et au moins une donnée alphanumérique d'authentification de l'utilisateur.

7. Procédé selon la revendication 6, dans laquelle l'étape (d) est mise en œuvre conformément à un motif temporel prédéterminé.

8. Procédé selon l'une des revendications 1 à 7, dans lequel ledit terminal (1) est déterminé à proximité et l'étape (a) mise en œuvre, quand une connexion sans-fil de courte portée est établie entre le terminal (1) et l'équipement client (2), en particulier une connexion Bluetooth Low Energy ou Ultra Wide Band.

9. Procédé selon l'une des revendications 1 à 8, dans lequel l'étape (b) comprend la génération de la donnée biométrique candidate à partir d'un trait biométrique de l'utilisateur fourni par des moyens d'acquisition biométrique (23) de l'équipement (2).

10. Procédé selon l'une des revendications 1 à 9, dans lequel le procédé comprend la mise en œuvre par des moyens de traitement de données (11) du terminal (1) d'une étape (a0) antérieure d'obtention de l'au moins une donnée alphanumérique d'authentification de l'utilisateur, et de génération de la donnée biométrique de référence à partir d'un trait biométrique de référence de l'utilisateur.

11. Procédé selon la revendication 10, dans lequel l'étape (a0) comprend le chiffrement desdites donnée biométrique de référence et au moins une donnée alphanumérique d'authentification de l'utilisateur avec une clé publique de l'équipement client (2), l'étape (a) comprenant leur déchiffrement par les moyens de traitement de données (21) de l'équipement client (2) avec une clé privée de l'équipement client (2).

12. Procédé selon l'une des revendications 1 à 11, dans lequel l'au moins une donnée alphanumérique d'authentification de l'utilisateur comprend un mot de passe de l'utilisateur ou une empreinte cryptographique d'un mot de passe de l'utilisateur.

13. Equipement client (2) comprenant des moyens de stockage de données (22) et des moyens de traitement de données (21), **caractérisé en ce que** lesdits moyens de traitement de données (21) sont configurés pour :
- Lorsqu'un terminal (1) personnel d'un utilisateur est à proximité dudit équipement client (2), recevoir depuis le terminal (1) et stocker temporairement sur les moyens de stockage de données (22) :
- une donnée biométrique de référence dudit utilisateur ; et
- au moins une donnée alphanumérique d'authentification de l'utilisateur ;
stockés sur des moyens de stockage de données (12) du terminal (1) ;
- Identifier ledit utilisateur via une reconnaissance biométrique à partir d'une donnée biométrique candidate de l'utilisateur et de la ou les données biométriques de référence stockée(s) sur les moyens de stockage de données(22) ;
- Utiliser l'au moins une donnée alphanumérique d'authentification de l'utilisateur identifié stockée sur les moyens de stockage de données (22), pour authentification dudit utilisateur.

14. Ensemble comprenant un équipement client (2) selon la revendication 13, et au moins un terminal (1) personnel d'un utilisateur comprenant des moyens de stockage de données (12) stockant :
- une donnée biométrique de référence dudit utilisateur ; et
- au moins une donnée alphanumérique d'authentification de l'utilisateur.

15. Produit programme d'ordinateur comprenant des instructions de code pour l'exécution d'un procédé selon l'une des revendications 1 à 12 d'authentification d'un utilisateur sur un équipement client (2), lorsque ledit procédé est exécuté sur un ordinateur.

16. Moyen de stockage lisible par un équipement informatique sur lequel un produit programme d'ordinateur comprend des instructions de code pour l'exécution d'un procédé selon l'une des revendications 1 à 12 d'authentification d'un utilisateur sur un équipement client (2).
